Europäisches Patentamt

European Patent Office

Office européen des brevets

(11) Publication number: **0 195 235**
**A2**

(19)

(12) **EUROPEAN PATENT APPLICATION**

(21) Application number: **86101705.1**

(22) Date of filing: **11.02.86**

(51) Int. Cl.⁴: **G 11 B 5/127**
**G 11 B 5/187**
**//G11B5/53**

(30) Priority: **15.03.85 JP 50447/85**

(43) Date of publication of application:
**24.09.86 Bulletin 86/39**

(84) Designated Contracting States:
**DE FR GB**

(71) Applicant: **HITACHI, LTD.**
**6, Kanda Surugadai 4-chome Chiyoda-ku**
**Tokyo 100(JP)**

(72) Inventor: **Ozaki, Shinji**
**2-2-2, Motonakayama**
**Funabashi-shi Chiba-ken(JP)**

(72) Inventor: **Morikawa, Juichi**
**2774-29, Mawatari Mukaino**
**Katsuta-shi Ibaraki-ken(JP)**

(72) Inventor: **Ishihara, Kiyoshi**
**2-204, Dream Heights 1252-13, Fukaya-cho**
**Totsuka-ku Yokohama-shi(JP)**

(74) Representative: **Altenburg, Udo, Dipl.-Phys. et al,**
**Patent- und Rechtsanwälte**
**Bardehle-Pagenberg-Dost-Altenburg-Frohwitter &**
**Partner Postfach 86 06 20**
**D-8000 München 86(DE)**

(54) **Magnetic head and method of producing the same.**

(57) Disclosed is a magnetic head which comprises: a pair of main cores (13a,13b), each being made of a magnetic alloy, having a head gap (11) and forming a magnetic circuit; a pair of sub-cores (12,a,12b), each being made of a magnetic ferrite having a lower saturation flux density than that of said main cores (13a,13b), and bonded to both sides of said main cores (13a,13); and a head gap forming member (14a,14b) made of a nonmagnetic material, interposed between said main cores (13a,14b) and extending over the entire width of a tape abrasion surface of a head; wherein the gap length $\ell$ of the head gap (11) and the wavelength $\lambda$ of an erase signal satisfy the relation $\ell/\lambda > 1$.

*FIG. 3*

**0195235**

SPECIFICATION

TITLE OF THE INVENTION:

MAGNETIC HEAD AND METHOD OF PRODUCING THE SAME

BACKGROUND OF THE INVENTION

This invention relates to a magnetic head suitable for use in combination with a magnetic recording medium with high coercive force such as a metallic tape. More particularly, the present invention relates to a magnetic head and method of producing a magnetic head which head is used while mounted to a rotary magnetic head device of a video tape recorder of a helically scanning type and is suitably used as a rotary erase head for erasing each video track prior to the video track during recording.

Home video tape recorders have been made remarkably compact in recent years and so-called "8 mm video" has been put on the market as an example of such compact home video tape recorders. The 8 mm video is a video tape recorder integrated with a video camera which can record and reproduce for as long as 90 to 120 minutes by use of a compact cassette whose size is equivalent to that of an audio compact cassette. The fundamental mechanism of the 8 mm video consists of a rotary two head system in

0195235

the same way as in conventional VHS system home video tape recorders. The main characteristic feature of the 8 mm video lies in its video tape, and a metallic tape as a recording medium with high coercive force is introduced. The use of this metallic tape realizes long period recording and reproduction using the compact cassette equivalent to the audio compact cassette and can provide picture quality comparable to the picture quality in the long play mode of conventional home video tape recorders. Since the 8 mm video includes the video camera as described above, shooting with video camera is possible. An edit function is important for this shooting with camera and an erase head or heads are necessary for phase match editing.

A fixed head and a rotary head can be used, in principle, as the erase head. However, the fixed erase head involves the following problems. Since change-over erasing of a diagonal scanning pattern for each field is not possible, a triangular unerased portion occurs on the tape pattern and double recording by new signals deteriorates the picture quality. Furthermore, the fixed erase head increases a tape load and the number of necessary components in a tape travelling path increases. For these

0195235

reasons, the fixed erase head is not suitable for a compact video tape recorder.

In order to make the most of the characterizing feature of the 8 mm video and to enjoy shooting with video camera, therefore, it is preferred to use a rotary erase head which can be mounted to a rotary magnetic head device.

Generally, magnetic alloy members are suitable as the material for this erase head because the metallic tape ordinarily has high coercive force of above 1,000 Oe (oersteds). However, since the magnetic alloy member has low wear resistance, a practical head can not be obtained by this magnetic alloy member alone.

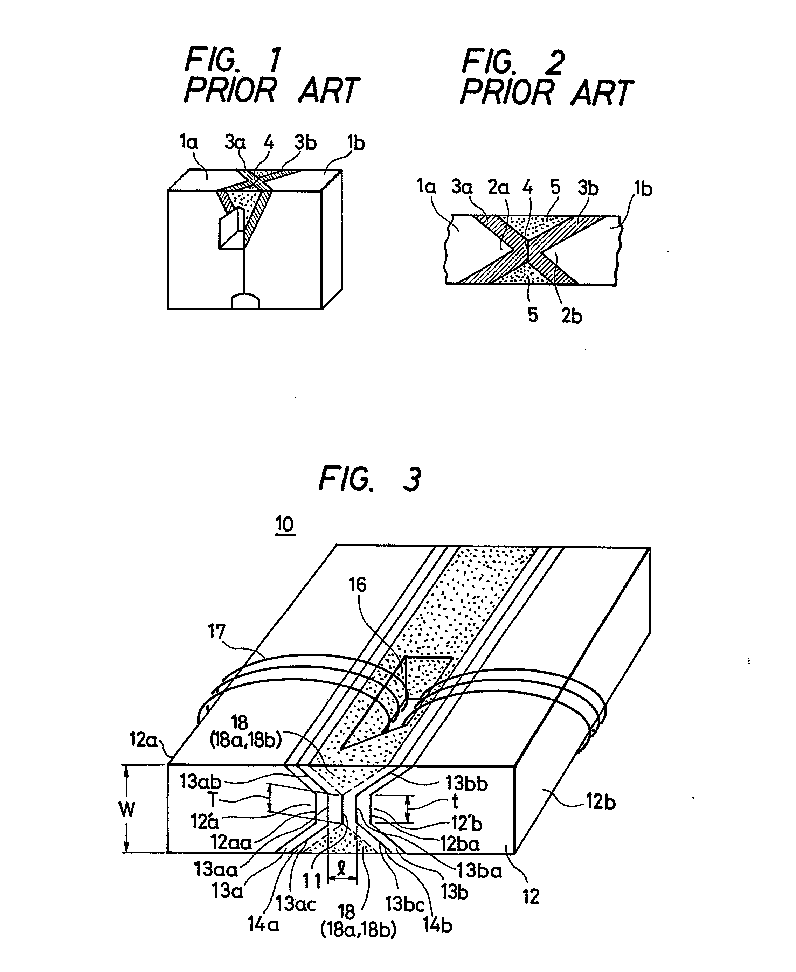

On the other hand, a magnetic tape having a structure such as shown in Figs. 1 and 2 has been proposed as a magnetic tape for recording and reproducing video signals which is suitable for the metallic tape.

Main cores 3a and 3b define an X shape on the tape abrasion surface of the head as shown in the drawings, and a function gap 4 is formed at the cross portion at the center of these cores. Sub-cores 1a and 1b each having a V-shaped projection 2a, 2b are coupled to both sides of the main core.

The sub-cores consist of ferrite. The main and sub-cores together constitute a magnetic circuit for the magnetic head. Reference numeral 5 represents coupling glass that is filled into the V-shaped recesses that are defined by the X-shaped main cores 3a and 3b.

The magnetic head described above is characterized in that the metallic tape is effectively magnetized with a short recording wavelength and magnetic recording in a high frequency region becomes possible.

However, this prior art does not pay any consideration in order to apply the magnetic head to a magnetic head having a gap length of at least 1 μm which is suitable for the erase function.

## SUMMARY OF THE INVENTION

It is an object of the present invention to provide a magnetic head and method of producing the same which head is suitable for a metallic tape and having a wide head function gap suitable for erasing information signals (video signals) recorded on the magnetic tape.

In order to accomplish the object described above, the present invention extends a gap forming member, which forms a function gap of a main core

0195235

made of a magnetic alloy, in a direction of the front surface of the head, and sets the width of the function gap so as to exceed at least the wavelength of an erase signal.

In accordance with the present invention, there is obtained a magnetic head suitable for erasing a magnetic tape with high coercive force such as a metallic tape.

In accordance with the present invention, furthermore, excessive abrasion of coupling glass having low wear resistance can be prevented because a gap forming member having high wear resistance is extended over the entire width of the tape contact surface of the head.

BRIEF DESCRIPTION OF THE DRAWINGS

Figs. 1 and 2 are perspective views of a conventional magnetic head;

Fig. 3 is a perspective view showing a magnetic head in accordance with one embodiment of the present invention;

Figs. 4(a) to 4(h) are schematic sectional views each showing step-wise the production method of the magnetic head;

Figs. 5 and 6 are front views showing some application examples of the magnetic head shown in Fig. 3;

Fig. 7 is a perspective view showing the magnetic head in accordance with another embodiment of the present invention;

Figs. 8(a) to 8(c) and Fig. 9 are perspective views showing the magnetic heads in accordance with other embodiments of the present invention; and

Figs. 10 to 12 are characteristics diagrams useful for explaining the present invention.

DESCRIPTION OF THE PREFERRED EMBODIMENTS

Before completion of the present invention, the inventor attempted to realize a magnetic erase head having a gap length of at least 1 µm in magnetic heads of the type shown in Fig. 1, but found out that such a head could not be easily attained for the following reasons.

(1)    $SiO_2$ which is suitable as a gap forming member causes diffusion by melting due to thermal pressure contact with the coupling glass and generates bonding power, but the diffusion depth is at most 0.5 µm.  If the gap length is about 0.3 µm, therefore, the $SiO_2$ films to be formed on the two blocks become 0.15 µm.  When brought into thermal pressure contact, the $SiO_2$ films formed on both blocks diffuse into the coupling glass without leaving the boundary between their contact surfaces. If the gap length is above 1 µm, however, the $SiO_2$ films to be formed on both blocks become 0.5 µm and they can not diffuse and couple with each other by thermal pressure contact so that the boundary remains on their contact surfaces. As a result, both blocks cannot be coupled.

(2) When a resin is used as the gap forming member, coupling can be made irrespective of the gap length. However, the resin is unstable to the changes of temperature and moisture, and the changes exceed a practical limit particularly when the gap is at least 1 µm.

The present invention is directed to eliminate these problems.

Hereinafter, some preferred embodiments of the invention will be described with reference to the accompanying drawings.

Fig. 3 is a perspective view showing the magnetic head in accordance with one embodiment of the present invention. In the drawing, reference numeral 10 represents a head core, and 12a and 12b represent sub-cores consisting of a magnetic ferrite such as Mn-Zn or Ni-Zn, for example. The surfaces of the sub-cores facing each other describe a trapezoidal shape (with the tip of the mountain shape being rendered flat). In other words, the sub-cores have the protruding sectional shapes (projections 12'a and 12'b) on their tape facing surfaces. The tip surfaces 12a and 12b of these trapezoidal sub-cores 12a and 12b define a later-appearing track width T by their width t. They also serve to prevent magnetic saturation at the edge portions of the sub-cores 12a and 12b and to prevent also the damage of the projections 12'a and 12'b during the production process.

Since they use a magnetic material, the sub-cores 12a and 12b increase Q of the magnetic head as well as its erase ratio $\Delta$.

In other words, the erase current (head current $I_H$) becomes maximal when an erasing frequency f is in agreement with a resonance frequency $f_r$ which is determined by a head inductance $L_H$ and a capacitance C in accordance with the following equation:

$$f_r = \frac{1}{2\pi\sqrt{L_H C}}$$

When a recording signal of the magnetic tape is erased by this erasing frequency, the erase ratio $\Delta$, the head current $I_H$ and the number of head turns $N_H$ have the following relation:

0195235

$$\Delta \alpha I_H \cdot N_H$$

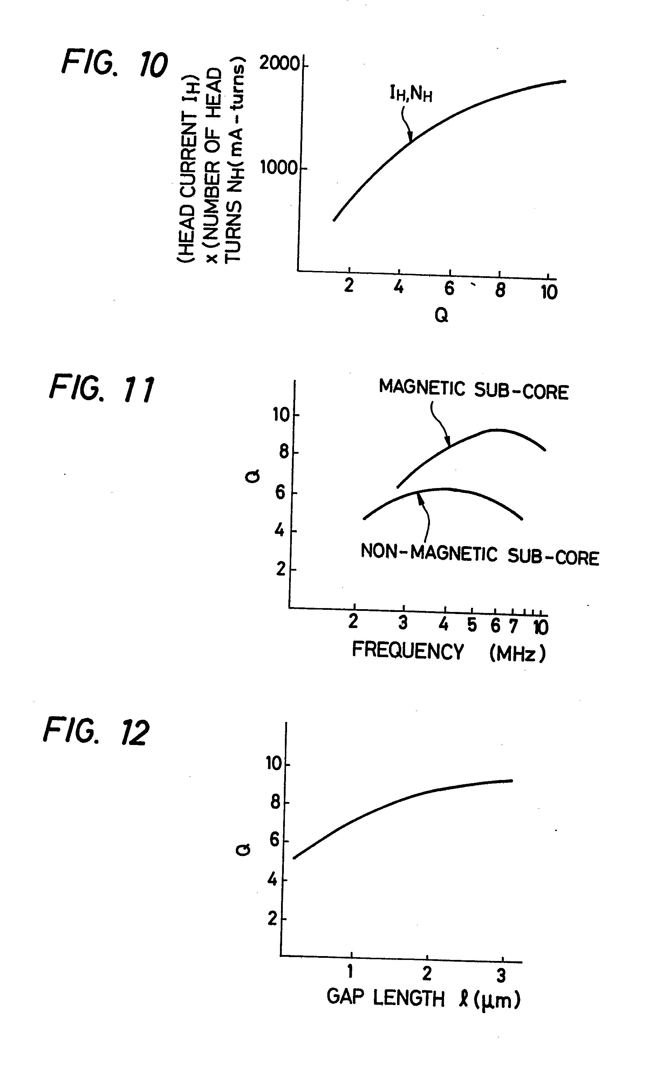

Furthermore, the greater Q, the greater becomes this $I_H \cdot N_H$ as shown in Fig. 10, and the greater becomes the erase ratio $\Delta$, too.

On the other hand, Q changes with the material of the sub-cores 12a and 12b as shown in Fig. 11. When a magnetic material is used for the sub-cores, Q becomes greater than when a non-magnetic material is used. For, Q has a relation $Q\alpha 1/R$ with magnetic resistance R. As shown in Fig. 12, Q is also associated with the gap length $\ell$, and the greater the gap length $\ell$, the greater becomes Q.

As described above, suitable electro-magnetic characteristics for the erase head can be obtained by a composite structure which uses the magnetic material for the sub-cores 12a and 12b and which sets the gap length $\ell$ to be at least 1 μm.

Reference numerals 13a and 13b represent main cores made of a magnetic alloy. The main cores are formed uniformly on the surface of the trapezoidal projections 12'a and 12'b of the sub-cores, respectively. The main cores 13a and 13b include head gap facing surfaces 13aa and 13ba that are in parallel with one another and have a predetermined angle with respect to the travelling direction of the magnetic recording medium, and crossing surfaces (inclined surfaces) 13ab, 13ac, 13bb, 13bc, that cross slantingly the head facing surfaces. The inclined surfaces 13ab, 13ac, 13bb and 13bc together form a narrow track.

Any high permeability materials can be used for the main cores 13a and 13b so long as they have a higher saturation flux density that the sub-cores 12a, 12b and near-zero magnetostriction. Definite examples include Fe-Si alloys, Fe-Aℓ-Si alloys or so-called "sendust alloys", Ni-Fe alloys or so-called "permalloys", magnetic amorphous alloys consisting of Co, Fe and the like as the principal components, and so forth. The main cores 13a and 13b may also comprise a laminated magnetic member produced by alternately laminating 100 Å to 1 μm thick non-magnetic layers of $SiO_2$ or $Aℓ_2O_3$ and a high saturation flux density layers. The sum of the thickness of the laminate is several microns (μm).

Reference numerals 14a and 14b represent gap forming members made of a non-magnetic material. These members are formed uniformly on the projecting portions of the main cores 13a and 13b, that is, on the head gap facing surfaces 13aa, 13ba and the

inclined surfaces 13ab, 13ac, 13bb and 13bc, respectively, as shown in the drawing.  Any materials can be used for the gap forming members 14a, 14b so long as they are non-magnetic materials, but it is preferred to use $SiO_2$, $Al_2O_3$ or the like because such a non-magnetic material has good adhesion with the magnetic alloy of the main cores 13a, 13b and has high affinity with later-appearing coupling glass 18 (18a, 18b).  The gap forming members may consist of a laminate of a plurality of kinds of non-magnetic materials.

The parallel surfaces at the center of the gap forming members 14a, 14b are coupled with each other in such a manner as to define a gap 11 corresponding to the track width T by this joint surface.  The width of this gap 11 or the track width T is formed when the main cores 13a, 13b and the gap forming members 14a, 14b are laminated on the surfaces of the trapezoidal projections 12'a, 12'b of the sub-cores 12a, 12b.  Therefore, the width of the gap 11 or the track width T can be defined by the width t of the tip surfaces 12aa, 12ba of the trapezoidal projections 12'a, 12'b of the sub-cores 12a, 12b. When, for example, the track width T is 40 μm, the width t of the sub-cores 12a, 12b may be set to

about 37 μm in consideration of the thickness of the laminate (1 to several microns) of the main cores and the gap forming members. Both ends of each gap forming member 14a, 14b expands outwards diagonally vertically in the drawing over the entire width W of the tape contact surface.

The gap 11 having the erase function is set so as to satisfy the relation $\ell/\lambda > 1$ with respect to a gap length $\ell$ and an erase signal frequency $\lambda$. The erase signal frequency has a higher frequency (at least 5 MHz) than a luminance FM signal frequency, and $\ell$ is at least 1 μm and is ordinarily from 2 to 3 μm.

The angle of the gap 11 (azimuth angle) can be set arbitrarily. However, since the 8 mm video uses azimuth recording, the gap angle of 90° (so-called azimuth zero) with respect to the scanning angle of the magnetic head is most effective. In other words, if the width t of the tip surfaces of the trapezoidal projections 12'a, 12'b of the sub-cores 12a, 12b is 90° with respect to the scanning direction, the gap forming members 14a, 14b to be laminated can be formed in the same way. Though the gap forming members 14a, 14b have a predetermined thickness in accordance with the length $\ell$ of

0195235

the gap 11, they are preferably laminated substantially in the thickness of 1/2ℓ. If the gap length ℓ is 3 μm, for example, the sub-cores 12a and 12b may be laminated in a thickness of 1.5 μm, respectively.

The coupling glass 18 (18a, 18b) is filled into a V-shaped groove (narrow track contracted portion) which is formed by the inclined surfaces 13ab, 13bb and 13ac, 13bc of the main cores 13a and 13b when the center portions of the gap forming members 14a, 14b are bonded. From the aspect of the production process, this glass is preferably low melting-point glass with lead and boric acid. This low fusion glass has low wear resistance. However, this drawback car be covered by using a material having high wear resistance for the gap forming members 14a, 14b and extending the material throughout the entire width W of the tape contact surface. In addition, excessive wear of the coupling glass 18 (18a, 18b) can be prevented.

Reference numeral 16 represents a winding hole and 17 does a winding for applying the erase signal.

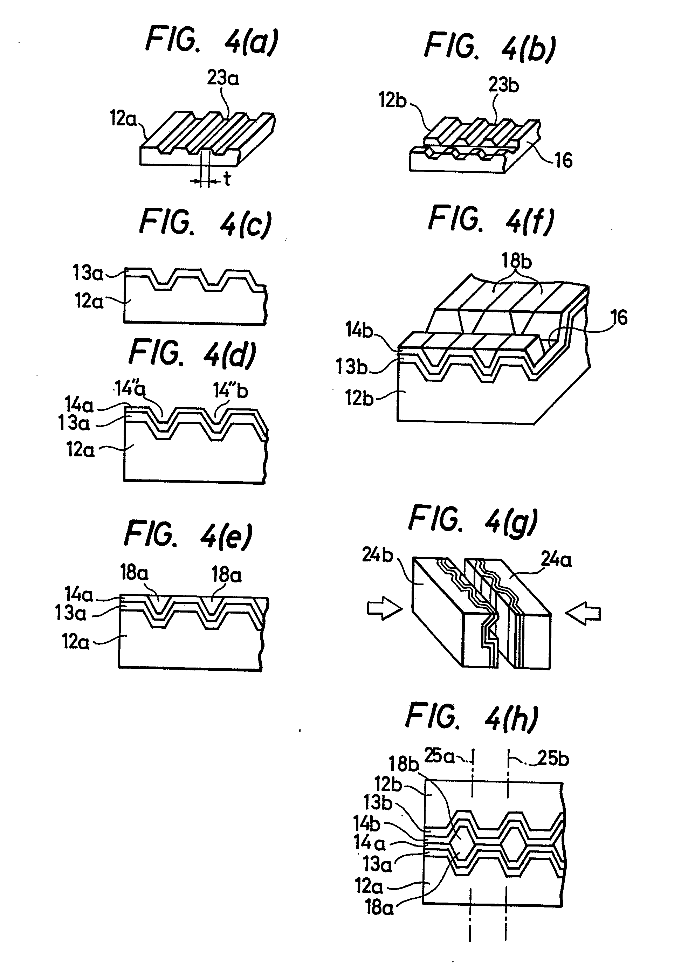

Next, the production method of the magnetic head shown in Fig. 3 will be explained with reference to Fig. 4.

(a) Trapezoidal grooves 23a, 23b for contracting the track width are formed on magnetic ferrite substrates 12a, 12b (sub-cores) such as Mn-Zn, Ni-Zn or the like as shown in Figs. 4(a) and 4(b). The trapezoidal grooves 23a, 23b can be formed by fixing the ferrite substrates of Mn-Zn, Ni-Zn or the like by lapping and then working the substrates by dicing saw. The grooves may have an arbitrary shape such as U-shaped grooves so long as they can define the track width. The winding hole 16 is further formed on the ferrite substrate 12b in a direction that crosses at right angles the trapezoidal groove 23b as shown in Fig. 4(b).

(b) Next, the magnetic alloy (main core) 13a (13b) is vacuum-deposited on the surface of the ferrite substrate 12a (12b) as shown in Fig. 4(c). Here, a magnetic amorphous material such as Co-Nb-Zr amorphous is sputtered in a thickness of several microns.

(c) The non-magnetic material (gap forming member 14a, 14b) is then laminated on the upper surface of this magnetic alloy 13a (13b) as shown in Fig. 4(d). The gap forming member is obtained by, for example, sputtering $SiO_2$ or the like in the same way as the step (b) and shaping it to about 1.5 μm

which is half the length of the gap length $\ell$.

(d)   A non-magnetic glass material 18a (18b) is filled into the trapezoidal groove 14"a, 14"b formed after the step (c) as shown in Figs. 4(e) and 4(f).   Low melting point glass with lead and boric acid, for example, which has affinity with the gap forming member 14a, 14b is filled into the groove 14"a, 14"b.

(e)   After the step (c) is completed, the winding hole 16 is formed on at least one of the blocks in a direction crossing at right angles the trapezoidal groove 23a, 23b as shown in Fig. 4(f), and these two blocks are then brought into thermal pressure contact as shown in Fig. 4(f).   Here, the blocks 24a and 24b formed on the basis of the two kinds of ferrite substrates (Figs. 4(a) and 4(b)) are pressurized in such a manner that the gap forming members 14a and 14b come into mutual contact, and they are simultaneously heated.   Pressure bonding can be attained more quickly with a higher heating temperature, but the heating temperature is set to be below about 500°C because the Curie point of Co-Nb-Zr is about 500°C.   Due to this heating, both blocks 24a and 24b can be bonded by the diffusion and melting of $SiO_2$ of the gap forming members 14a, 14b, the low fusion glass 18a, 18b and the low fusion glass disposed on both blocks 24a, 24b.

(f)  Thereafter, this block is cut in a predetermined size.  In other words, the block is cut along one-dot-chain lines 25a, 25b in Fig. 4(h) to obtain the magnetic head having the gap length of about 3 μm shown in Fig. 1.  The gap length $\ell$ can be set arbitrarily by changing the thickness of the $SiO_2$ film of the step (c).  It is also possible to form the gap by further laminating non-magnetic materials other than $SiO_2$, such as $A\ell$, Cr and the like that can be oxidized.

According to the production method described above, the low fusion glass is exposed on the joint surfaces of both blocks 24a, 24b, so that reliable bonding can be attained and at the same time, a magnetic head having an arbitrary gap length can be obtained.  The size of this magnetic head is about 2 mm square, and there can be provided a rotary magnetic erase head which can be mounted to a rotary magnetic head device.

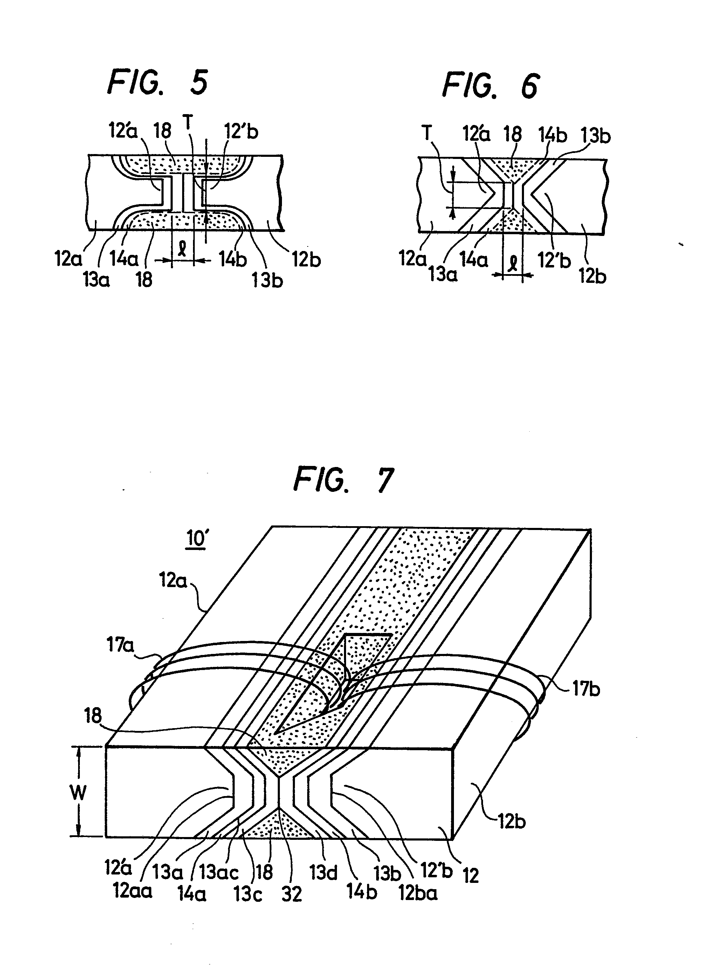

In the foregoing embodiments, the shapes of the surfaces 12'a, 12'b on the side of the gap 11 of the sub-cores 12a, 12b are trapezoidal, but they may be ⊐-shaped or V-shaped as shown in Figs. 5 and 6.

0195235

In Fig. 5, the main cores 13a, 13b and the gap forming members 14a, 14b have linear portions extending from both ends of the gap facing surfaces in the horizontal direction and curved portions (inclined surfaces) extending diagonally vertically from the ends of the linear portions as shown in the drawing. In the case of the V-shape shown in Fig. 6, the main cores 13a, 13b are shpaed so that the joint surface sides are trapezoidal and the main cores define the track width T. Incidentally, like reference numerals are used in Figs. 5 and 6 to represent the same or like constituents as in the embodiment shown in Fig. 3 and the detailed description of such constituents is omitted.

The magnetic heads shown in Figs. 5 and 6 can be produced in the same way as above.

Fig. 7 is a perspective view of a magnetic head in accordance with still another embodiment of the present invention. After the magnetic alloy 13a, 13b and the non-magnetic material 14a, 14b as the gap forming members are formed on the surfaces of the trapezoidal projections 12a, 12b of the magnetic ferrite 12a, 12b, the magnetic alloy 13c, 13d are further deposited by sputtering, and the magnetic ferrite 12a, 12b is bonded with each other on the boundary surface 32 by the low fusion glass 18 (18a, 18b). Here, the magnetic alloy 13a, 13b is 2 to 3 µm thick, the gap forming member 14a, 14b is 1.5 to 3 µm thick and the magnetic alloy 13c, 13d is 1 to 2 µm thick.

Next, the windings 17a, 17b are wired as shown in the drawing, and when the erase signal is applied to the windings, the non-magnetic materials 14a and 14b become separate magnetic gaps, forming a so-called "double gap type" magnetic head 10'. As is known in the art, the erase characteristics of the double gap type magnetic head are superior to those of the single gap type head shown in Fig. 3. In other words, the erasing current can be reduced in comparison with the type shown in Fig. 3, and unnecessary signal leakage in the rotary magnetic head device can be further reduced.

If the number of layers of the non-magnetic material is increased, a triple or quadruple magnetic gap can be constituted and the erase performance can be improved drastically.

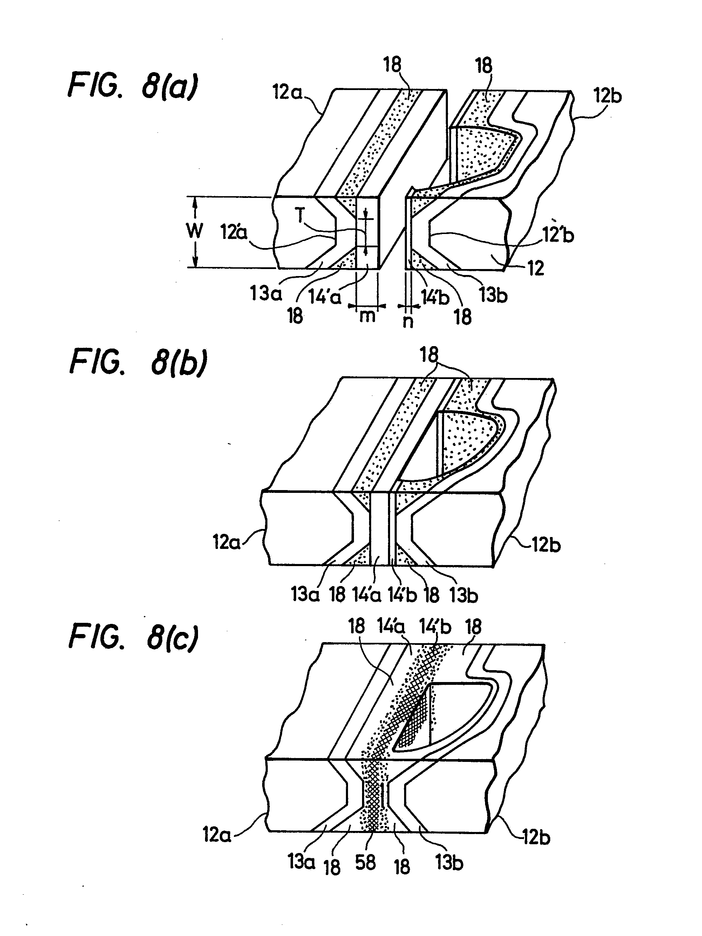

Fig. 8 shows still another embodiment of the present invention. Fig. 8(a) is a perspective view showing the magnetic gap 11' of the magnetic head, Fig. 8(b) is a perspective view showing the state in which two cores are thermally pressure-bonded via the gap forming members 14'a, 14'b, and Fig. 8(c) is a perspective view showing the fusion and melting state of the gap forming member after pressure bonding. Though these drawings show only one magnetic head, a plurality of magnetic heads such as shown in Fig. 4 are simultaneously produced in the actual production process.

In Fig. 8(a), the magnetic amorphous material 13a, 13b as the main core is bonded to the trapezoidal projections 12'a, 12'b of the sub-cores 12a, 12b consisting of Mn-Zn ferrite, the low fusion glass 18 is filled into the portions of the main cores other than the track width T and the magnetic gap forming material, that is, $SiO_2$ film 14', 14', and is then bonded. The $SiO_2$ film 14', 14' is rectangular which extends to the core width of the head core 12, that it, throughout the entire width W of the tape abrasion surface. The $SiO_2$ films 14'a and 14'b have different thickness m and n from each other. Since the practical magnetic gap length is 3 µm, m is 2.5 µm and n is 0.5 µm. This value n = 0.5 µm corresponds to the maximum diffusion and melting depth of $SiO_2$ and the low fusion glass due to the thermal pressure bonding at the step shown in Fig. 8(b). At this step, the heating temperature is set within a range that does not exceed the Curie point of the magnetic amorphous material 13a, 13b, and diffusion of $SiO_2$ is effected virtually at about 460°C.

The portion with oblique lines in Fig. 8(c) represents the $SiO_2$ film 14'a, 14'b and the portion with dots represents the portion where the mixture of $SiO_2$ 14'a, 14'b and low fusion glass exists.

This magnetic head has the characterizing feature in that the track width T of the magnetic gap 11' can be determined accurately. In other words, only the magnetic amorphous material 13, 13 exists between the sub-cores 12a, 12b and the magnetic gap 11' that define the track width and hence the track wide can be determined accurately. $SiO_2$ has higher wear resistance than the low fusion glass, prevents excessive wear of the coupling glass and provides satisfactory tape contact.

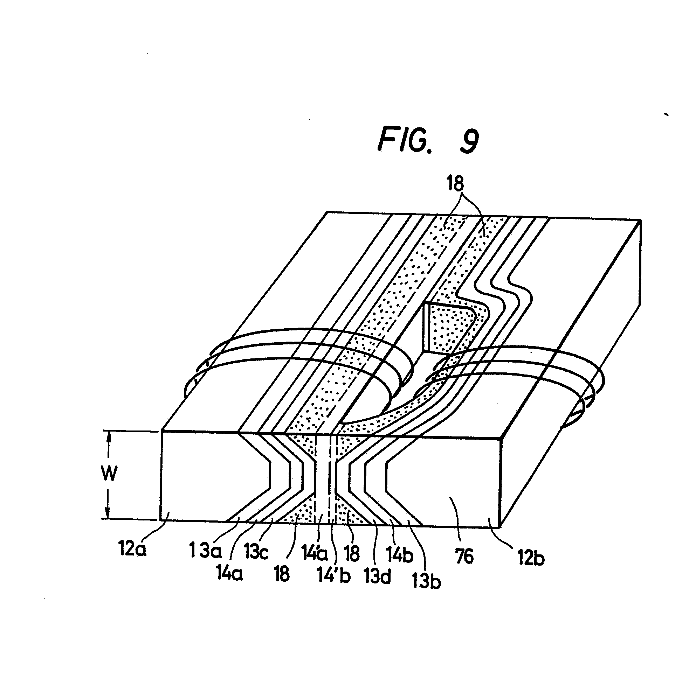

The structure shown in Fig. 9 can be used by combining the embodiments shown in Figs. 8 and 1 with the embodiments shown in Figs. 3 and 7.

In Fig. 9, the first magnetic alloy 13a, 13b, the first non-magnetic material 14a, 14b of $SiO_2$ and

the second magnetic alloy 13c, 13d are sequentially bonded by sputtering to the trapezoidal surface of the sub-core 12a, 12b of magnetic ferrite and the low fusion glass is then buried into the portions other than the track width. Next, the second non-magnetic material 14'a, 14'b is disposed in the same way as in the embodiment shown in Fig. 8, thereby coupling the right and left sub-cores 12a, 12b shown in Fig. 9. This embodiment is characterized in that three magnetic gaps are disposed on the tape abrasion surface 76, and this magnetic head can provide excellent erase characteristics.

claims

1. A magnetic head comprising:

first and second sub-cores (12a, 12b) made of a magnetic material, each of said sub-cores having a projection (12'a, 12'b) on the cross-sectional surface thereof facing a magnetic recording medium;

first and second main cores (13a, 13b) made of a magnetic alloy having a higher saturation flux density than that of said first and second sub-cores, and bonded to the surfaces of said projections (12'a, 12'b) of said first and second sub-cores (12a, 12b), respectively;

said first and second main cores having head gap facing surfaces (13aa, 13ba) which are in parallel with each other and have a predetermined angle with respect to the travelling direction of said magnetic recording medium, and at least one inclined surface (13ab, 14bb and/or 13ac, 13bc) crossing diagonally said head gap facing surface, thereby constituting a narrow track;

a non-magnetic member (18) for coupling, buried into a narrow track contracted portion defined by said inclined surfaces of said first and second main cores; and

head gap forming members (14) interposed between said first and second main cores and having a higher wear resistance than that of said non-magnetic member (18) for coupling;

said head gap forming members (14) extending from said head gap facing surfaces (13aa, 13ba) of said main cores (13a, 13b) to said narrow contracted portion constituted by said inclined surfaces (13ab, 14bb and/or 13ac, 13bc);

said head gap forming members (14) being constituted in such a manner as to satisfy the relation $\ell/\lambda > 1$ with $\ell$ representing the gap length of the head gap (11) defined by the thickness of said head gap forming member (14) and $\lambda$ representing the wavelength of an erase signal.

2. A magnetic head according to claim 1 wherein said head gap forming members (14) consist of first and second non-magnetic members (14a, 14b) that are interposed between said first and second main cores and said first and second non-magnetic members are formed so as to extend on said head gap facing surfaces (13aa, 13ba) and said inclined surfaces (13ab, 13ac and/or 13bb, 13bc) of said first and second main cores (13a, 13b) and to form said head gap (11), and are coupled by diffusion and melting to said non-magnetic member for coupling.

3. A magnetic head according to claim 2 wherein said first and second main cores consist of a multi-layered structure (13a, 13c, 13b, 13d) interposing therebetween said first and second non-magnetic members (14a, 14b), respectively, one layer (13c, 13d) of said multi-layered structure of each of said main core is coupled to that of the other, and said first and second non-magnetic members form first and second head gaps, respectively.

4. A magnetic head according to claim 1 wherein each of said first and second main cores (13a, 13b) has a trapezoidal cross-section consisting of a head gap facing surface (13aa, 13ba) having a predetermined angle with respect to the travelling direction of said magnetic recording medium and being in parallel with said head gap facing surface of the other of said main cores, and an inclined surface (13ab, 13ac, 13bb, 13bc) extending outward from both end portions of said head gap facing surface and progressively spaced apart from that of the other main core; said first and second sub-cores (12a, 12b) have projections (12'a) having a shape corresponding to the trapezoidal shape of said first and second main cores (13a, 13b); said projections define said head gap facing surfaces (13aa, 13ba) of said first and second main cores (13a, 13b); said head gap forming members (14) are made of first and second non-magnetic members (14a, 14b); said first and second non-magnetic members are formed in such a manner as to extend on said head gap facing surfaces (13aa, 13ba) and inclined surfaces (13ab, 13ac, 13bb, 13bc) of said first and second main cores (13a, 13b); the portions of said first and second non-magnetic members (14a, 14b) facing said head gap facing surfaces (13aa, 13ba) are mutually bonded thereby to form said head gap (11); and the portions of said inclined surfaces (13ab, 13ac, 13bb, 13bc) of said first and second non-magnetic members are bonded by diffusion and melting to said non-magnetic member (18) for coupling.

5. A magnetic head according to claim 1 wherein said first and second main cores (13a, 13b) have a trapezoidal cross-sectional shape consisting of head gap facing surfaces (13aa, 13ba) which are in parallel with each other and have a predetermined angle with respect to the travelling direction of said magnetic recording medium, and inclined surfaces (13ab, 13ac, 13bb, 13bc) extending outward from both ends of said head gap facing surfaces and progressively spaced apart from each other; said first and second sub-cores (12a, 12b) have V-shaped projections (12'a, 12'b), respectively, corresponding to said trapezoidal shape of said first and second main cores (13a, 13b); said head gap forming members (14) are made of first and second non-magnetic members (14a, 14b); said first and second non-magnetic members are formed in such a manner as to extend on said head gap facing surfaces (13aa, 13ba) and inclined surfaces (13ab, 13ac, 13bb, 13bc) of said first and second main cores (13a, 13b); the portions of said first and second non-magnetic members (14a, 14b) facing said head gap facing surfaces (13aa, 13ba) are mutually bonded thereby to form said head gap (11); and the portions of said inclined surfaces (13ab, 13ac, 13bb, 13bc) of said first and second non-magnetic members are bonded by diffusion and melting to said non-megnetic member for coupling.

6.   A magnetic head according to claim 1 wherein said first and second main cores (13a, 13b) have a channel-like (⊐-shaped) cross-sectional shape consisting of head gap facing surfaces (13aa, 13ba) which are in parallel with each other and have a predetermined angle with respect to the travelling direction of said magnetic recording medium, and substantially L-shaped surfaces extending outward from both ends of said head gap facing surfaces; said first and second sub-cores (12a, 12b) have projections (12'a, 12'b), respectively, having a shape corresponding to the channel-like shape of said first and second main cores (13a, 13b); said projections define said head gap facing surfaces (13aa, 13ba) of said first and second main cores (13a, 13b); said first and second non-magnetic members (14a, 14b) are formed in such a manner as to extend on said head gap forming surfaces (13aa, 13ba) and L-shaped surfaces of said first and second main cores (13a, 13b); the portions of said first and second non-magnetic members (14a, 14b) facing said head gap facing surfaces (13aa, 13ba) are mutually bonded thereby to form said head gap (11); and the portions of said L-shaped surfaces of said first and second non-magnetic members are bonded by diffusion and melting to said non-magnetic member for coupling.

7.    A magnetic head according to claim 3 wherein a third non-magnetic member (14'a, 14'b) having the same width as the core width (W) of said first and second main cores and extending in parallel with said head gap facing surfaces (13aa, 13ba) of said main cores is disposed between said first and second main cores in order to constitute a third head gap.

8.    A magnetic head according to any of claims 1 through 7 wherein said first and second main cores (13a, 13b) are made of a member selected from the group consisting of sendust alloy, permalloy and amorphous alloy; said first and second sub-cores (12a, 12b) are made of magnetic ferrite; said non-magnetic member (18) for coupling is made of low melting point glass with lead and boric acid; and said head gap forming member (14) is made of either $SiO_2$ or $Al_2O_3$ having good adhesion with said first and second main cores (13a, 13b) and high affinity with said non-magnetic members (18) for coupling.

9.    A method of producing a magnetic head comprising the steps of:

forming a groove (23a, 23b) which determines a track width (T) of a head gap (11) on one of the surfaces of each of first and second blocks (24a, 24b) for forming first and second subcores (12a, 12b);

forming a winding hole (16) crossing at right angles said groove (23b) on at least one of said first and second blocks (24a, 24b);

depositing a magnetic film (13a, 13b) which forms first and second main cores on the surfaces of said first and second blocks (24a, 24b) on which said grooves are formed;

depositing a first non-magnetic film (14) which forms said head gap (11) on the upper surface of said magnetic film (13a, 13b);

filling coupling glass (18) into a recess defined by said grooves (23a, 23b) of said non-magnetic film (14) which determine said track width;

bringing said first and second blocks (24a, 24b) into thermal pressure contact with each other via said magnetic film (13a, 13b) and said non-magnetic film; and

cutting said first and second blocks (24a, 24b) thus bonded into a predetermined shape to obtain head cores.

10. A method of producing a magnetic head comprising the steps of:

forming a groove (23a, 23b) which determines a track width (T) of a head gap (11) on one of the surfaces of each of first and second blocks (24a, 24b) for forming first and second sub-cores (12a, 12b);

forming a winding hole (16) crossing at right angles said groove (23b) on at least one of said first and second blocks (24a, 24b);

depositing a magnetic member (13a, 13b) which forms first and second main cores on the surfaces of said first and second blocks (24a, 24b) on which said grooves are formed;

filling coupling glass (18) into a recess defined by said grooves (23a, 23b) of said magnetic film (13a, 13b) which determine said track width;

depositing a non-magnetic member (14) which forms said head gap (11) on the upper surface of said magnetic film (13a, 13b) and on the upper surface of said glass (18);

bringing said first and second blocks (24a, 24b) into thermal pressure contact with each other via said magnetic film (13a, 13b), said non-magnetic member (14) and said glass (18); and

cutting said first and second blocks (24a, 24b) thus bonded into a predetermined shape to obtain head cores.

11. A method of producing a magnetic head according to claim 10 wherein said non-magnetic film (14) consists of a multi-layered film (14'a, 14'b) consisting in turn of films having different thickness.

## FIG. 1
### PRIOR ART

1a 3a 4 3b 1b

## FIG. 2
### PRIOR ART

1a 3a 2a 4 5 3b 1b

5 2b

## FIG. 3

10

16

17

18
(18a,18b)

12a

13ab          13bb
T
12´a          t
12aa          12´b
                12ba
13aa          13ba
13a           13b
      11  ℓ
13ac          13bc
14a   18   14b   12
   (18a,18b)

## FIG. 4(a)

23a
12a

t

## FIG. 4(b)

12b
23b
16

## FIG. 4(c)

13a
12a

## FIG. 4(f)

18b
14b
13b
12b
16

## FIG. 4(d)

14"a
14a
13a
12a
14"b

## FIG. 4(e)

18a
14a
13a
12a
18a

## FIG. 4(g)

24b
24a

## FIG. 4(h)

18b
12b
13b
14b
14a
13a
12a
18a
25a
25b

## FIG. 5

12'a  18  T  12'b

12a  14a  14b  12b
13a  18  13b

## FIG. 6

T  12'a  18  14b  13b

12'a  14a  12'b  12b
13a

## FIG. 7

10'

12a

17a

17b

18

W

12b

12'a  13a  13ac  18  13d  13b  12'b  12
12aa  14a  13c  32  14b  12ba

FIG. 8(a)

FIG. 8(b)

FIG. 8(c)

FIG. 9

18

W

12a    13a / 13c    14a \ 18    14b    76    12b
       14a    18    14'b  13d  13b

FIG. 10

$I_H, N_H$

(HEAD CURRENT $I_H$) × (NUMBER OF HEAD TURNS $N_H$ (mA − turns)

Q

FIG. 11

MAGNETIC SUB-CORE

NON-MAGNETIC SUB-CORE

Q

FREQUENCY (MHz)

FIG. 12

Q

GAP LENGTH $\ell$ (μm)